# EUROPEAN PATENT APPLICATION

(11) **EP 1 973 278 A1**
(43) Date of publication of application: **24.09.2008**
(21) Application number: 07300885.6
(22) Date of filing: 20.03.2007
(51) Int. Cl.: H04L 12/56

(54) **A method for scheduling of service data in uplink, a base station, a user terminal and a communication network therefor**

(71) Applicant: Alcatel Lucent, 75008 Paris (FR)
(72) Inventor: Kaminski, Stephen, 73054, Eislingen (DE); Doetch, Uwe, 71701, Schwieberdingen (DE); Aydin, Osman, 70569, Stuttgart (DE); Bakker, Hajo, 71735, Eberdingen (DE); Keil, Klaus, 73730, Esslingen (DE); Gruber, Markus, 70825, Korntal-Münchingen (DE)
(74) Representative: Brose, Gerhard

(57) **Abstract**

The invention concerns a method for scheduling of service data intended to be sent from a user terminal (UE1) over radio interfaces to a base station (BS1) by means of at least one control message sent from the base station (BS1) to the user terminal (UE1), whereby said at least one control message at least indicates or allows for a determination of a change of predefined transmission, time intervals (TTI) in which the user terminal (UE1) shall send transport blocks comprising a service data to the base station (BS1), a base station (BS1), a user terminal (UE1) and a communication network therefor.

## Description

The invention relates to a method for scheduling of service data according to the preamble of claim 1, a base station according to the preamble of claim 10, a user terminal according to the preamble of claim 12 and a communication network according to the preamble of claim 14.

Typically, a base station in a cellular radio communication network comprises resource schedulers that allocate physical layer resources for the downlink and uplink transport channels used for communication with user terminals with different schedulers operating for the downlink and the uplink.

Scheduling of services like e.g. conversational and streaming services such as Voice over Internet Protocol (VoIP) in cellular radio communication networks is often performed taking into account the quality of service (QoS) requirements as well as tne radio conditions in the corresponding serving radio cell, i.e. the scheduler preferably takes account of the traffic volume and the QoS requirements of each user terminal and associated radio bearers, when sharing resources like e.g, a frequency resource divided into resource blocks between user terminals. Typically, only grants per user terminal are used to grant the right to transmit on the uplink, i.e. there are no grants per user terminal and per resource block to grant the right to on the uplink.

Schedulers may assign physical layer resources taking into account the radio renditions at the user terminal identified by the user terminal.

Radio resource allocations can be valid for one or multiple so-called transmission time intervals (TTI).

Radio resource assignments comprise assignments of physical resource blocks (PRB) and modulation and coding schemes (MCS). Allocations tor time periods longer than one transmission time interval might also require additional information, as e.g. allocation time or allocation repetition factor.

Basic scheduler operations are e.g. described in the document 3GPP TS 36.300 V1.0.0 (2007-03); 3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2(Release 8) in the chapters 11.1 and 11.2.

One way of scheduling of radio resources with reduced signaling effort is to use persistent scheduling, i.e. scheduling with predefined transmission time intervals for the initial transmissions of transport blocks from a user terminal. If retransmissions are performed synchronously, i.e. in a fixed timely relative offset to the initial transmission, the transmit time intervals for the retransmissions are predefined as well. As with such synchronous retransmissions all the transmission time intervals used for the transmission from the user terminal are predefined, there is no need for signaling to the user terminal of the transmission time intervals that shall be used by the user terminal which reduces the signaling effort.

However, persistent scheduling in combination with synchronous retransmissions has che disadvantage of a potential waste of radio resources, as several transmission time intervals are reserved for retransmission for the user terminal that are unused in case or an already successfully performed transmission of previous transport blocks.

The object of the invention is thus to propose a method for a scheduling of service data using persistent scheduling with a reduced waste of radio resources, i.e. with an improved usage of predefined transmission time intervals.

This object is achieved by a method according to the teaching of claim 1, a base station according to the preamble of claim 10, a user terminal according to the preamble of claim 12 and a communication network according to the preamble of claim 14.

The main idea of the invention is thai: a base station occasionally sends a control message to a user terminal indicating a change of predefined transmission time intervals in which the user terminal shall send transport blocks comprising service data. Thus, the structure of originally predefined transmission time intervals can be adapted in a case where originally predefined transmission time intervals are needed for the transmission and especially the retransmission of other transport blocks.

Further developments of the invention can be gathered from the dependent claims and the following description.

In the following the invention will be explained further making reference to the attached drawings,

Fig. 1 schematically shows a communication network in which the invention can be implemented.

Fig. 2 schematically shows an uplink service data transmission in transport blocks in predefined transmission time intervals using persistent scheduling according to the prior art.

Fig. 3 schematically shows an uplink service data transmission in transport blocks in predefined and in shifted predefined transmission time intervals using persistent scheduling adapted by dynamic scheduling.

A communication in which the invention can be implemented comprises user terminals and base stations.

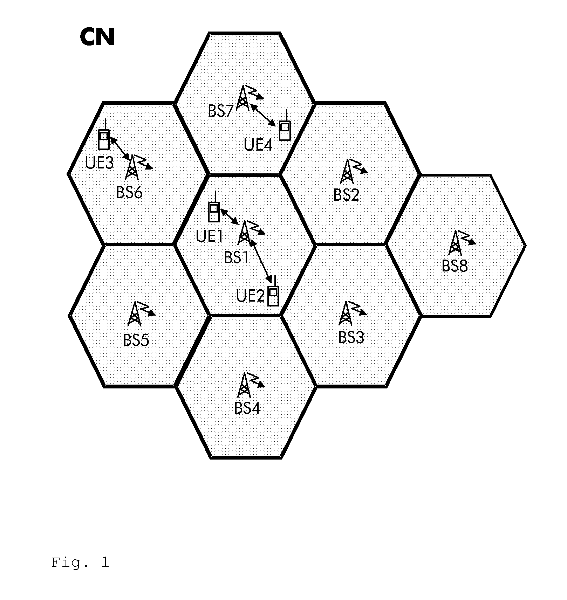

Fig. 1 shows an example for such a communication network CN that comprises base stations BS1-BS8 and user terminals UE1-UE4.

Each of said user terminals UE1-UE4 is connected to one or multiple of said base stations BS1-BS8, which is symbolized by double arrows in fig. 1. The base stations BS1-BS8 are in turn connected to a core network, which is not shown in fig. 1 for the sake of simplicity.

The user terminals UE1-UE4 comprise the functionality of a user terminal for transmission and reception of signaling and data messages in a network using radio transmission.

Furthermore, a user terminal UE.1-UE4 according to the invention is adapted to perform reception of at least one control message which at least indicates or allows for a determination of a change of predefined transmission time intervals in which the user terminal shall send transport blocks comprising service data to the base station, and adapted to perform said change of predefined transmission time intervals.

In an embodiment of the invention, a user terminal UEI-UE4 according to the invention is adapted to perform transmission of a control message indicating the reduction of the data rate of a service towards a base station.

The base stations BS1-BS8 comprise the functionality of a base station of a network using radio transmission, i.e. they provide the possibility for user terminals to get connected to said network and for data exchange of said user terminals by means of radio transmission.

Furthermore, a base station BS1-BS8 according to the invention is adapted to perform generation and transmission of a control message which at least indicates or allows for a determination of a charge of predefined transmission time intervals in which a user terminal shall send transport blocks comprising service data to the base station.

In an embodiment of the invention, a base station BS1-BS8 according to the invention is adapted to perform recognition and evaluation of an upcoming collision of the transmission of transport blocks of a user terminal with the transmission of transport blocks of at least one other user terminal caused by using the same resource blocks within the same transmission time interval for both transmissions.

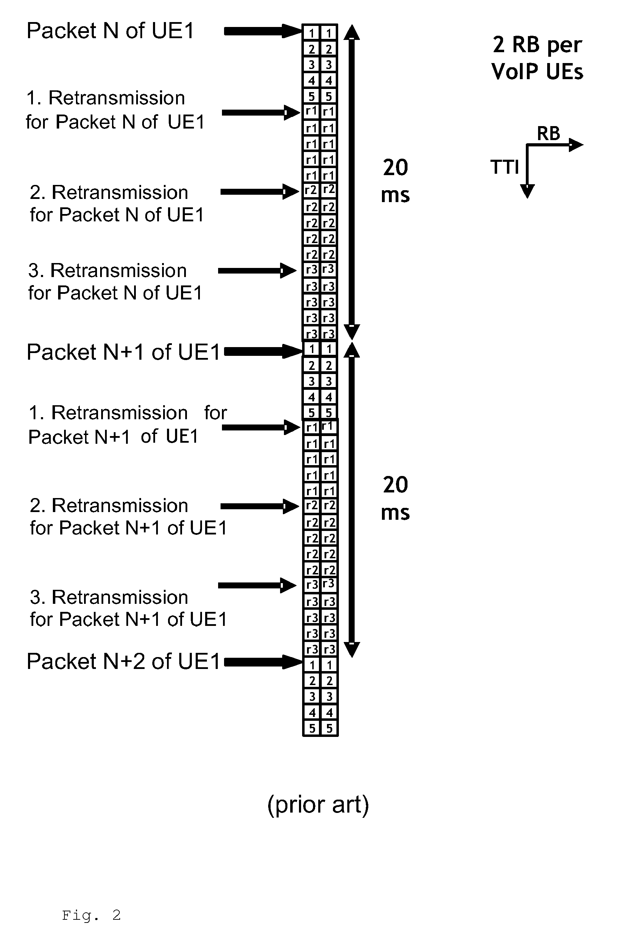

Fig. 2 shows a possible principle uplink service data transmission in transport blocks in predefined transmission time intervals using persistent scheduling according to the prior art disclosed in chapter 11.1 and 11.2 in the document 3GPP TS 36.300 V1.0.0 (2007-03) which, will be described in the following.

Fig. 2 shows frequency resources that can be used for uplink transmission depicted in a time-frequency grid with a horizontal frequency axis and a vertical time axis. The frequencies are grouped in resource blocks RB along the frequency axis, and the time axis is divided into transmission time intervals TTI.

For conversational and streaming services such as e.g. VoIP, there is a different periodicity for talkspurt periods compared to silence periods. Usual values are 20 ms tor the talks-ourt period and 160 ms for the silence period.

During a talkspurt period, the transmission of a data packet and possibly one or several retransmission from a user terminal to a base station have to be performed.

In the example depicted in fig. 2, each talkspurt period with a length of 20 ms as subdivided into 20 transmission time intervals TTI. The user terminal UE1 can use 2 resource blocks RB for the uplink transmission of service data.

In the first transmission time interval, the user terminal UBI sends service data of a packet N in transport blocks using two resource blocks R3 denoted with 1. The user terminal UE1 uses persistent scheduling with HKRQ (HARQ = Hybrid Automatic Repeat Request), i.e. there is a predefined period between transmission time intervals in which the user terminal UE1 can perform initial transmissions and retransmissions of a packet comprising service data. In the example of fig. 2, the user terminal UE1 can send service data in every fifth transmission time interval. As this period is predefined, no further signalling from the base station indicating to the user terminal UE1 which transmission time intervals it can use is required.

As there are 20 transmission time intervals in a talkspurt period, the user terminal UE1 can perform up to 3 retransmissions of packet N with a distance of 5 transmission time intervals between the transmission time intervals used by the user terminal UE1.

After 20 transmission, time intervals, a new talkspurt period begins during which the user terminal UE1 sends the next service data in a packet N+1, In the first transmission time interval of this talkspurt period, the user terminal UE1 sends the service data of a packet N+1 in transport blocks using two resource blocks RB again denoted with 1, The retransmission procedure for packet N+1 is analogue to the one described above for the retransmission of packet N.

As the period of transmission time intervals that can be used by the user terminal UE1 for transmissions and retransmissions is still predefined, still no further signalling from the base station indicating to the user terminal UE1 which transmission time intervals it can use is required.

As the forecast of the actual need for the number of retransmissions and thus for the actual needed length for the talkspurt and silence period is very difficult, the usage of persistent scheduling with predefined transmission time intervals is not optimal, as there may be unused radio bearer capacity. The reserved radio bearer capacity in up link includes re sources, which are not used if no HARQ retransmission or retransmissions are required. So resources in up to 3 transmission time intervals would be reserved unused if the BLER=0% (BLER = Block Error Rate) of a preceding transport block, i.e. no retransmission was necessary. For an initial transmission with BLER=0% this would result in a waste of 75 % of the reserved resources, which equals zo an efficiency of 25% of the reserved resources.

According to the invention, said unused reserved resources shall be distributed to one or several other user terminals, and the allocation of sai d unused resources shall be dynamically scheduled, i.e. the allocation for a defined number of transmission time intervals is explicitly indicated by the base station.

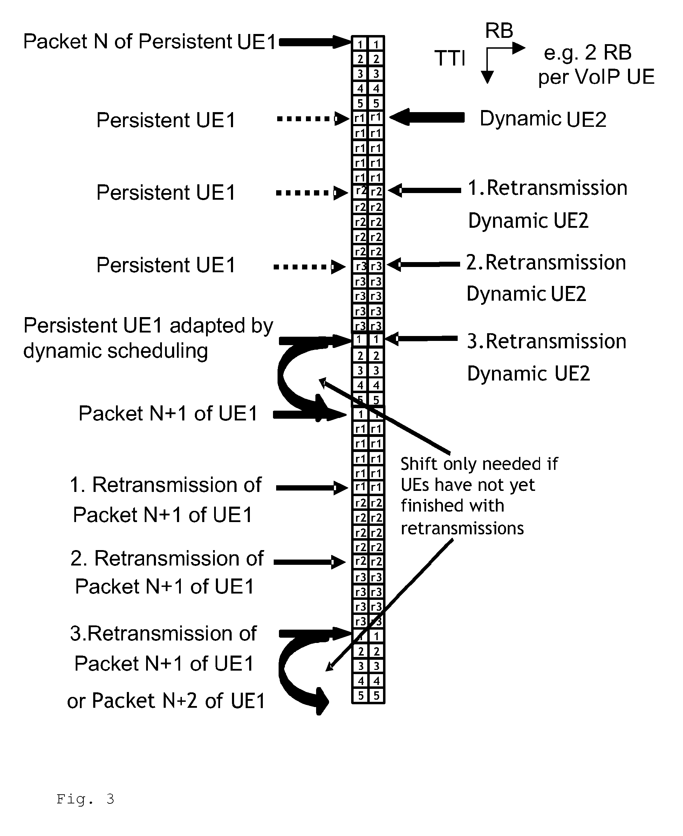

Fig. 3 shows an uplink service data transmission in transport blocks in predefined and in shifted predefined transmission time intervals using persistent scheduling adapted by dynamic scheduling according to the invention.

As in the prior art in fig. 2, frequency resources that can be used for uplink transmission are depicted in a time-frequency grid with a horizontal frequency axis and a vertical time axis. The frequencies are grouped in resource blocks RB along the frequency axis, and the time axis is divided into transmission time intervals TTI.

In the first transmission time interval, the user terminal UE1 sends service data of a packet N in transport blocks using two resource blocks RB denoted with 1. The user terminal UE1 uses persistent scheduling with synchronous HARQ (HARQ = Hybrid Automatic Repeat Request), i.e. there is a predefined period between transmission time intervals in which the user terminal UE1 can perform transmissions and retransmissions of a packet comprising service data. In the example of fig. 3, the user terminal UE1 can send service data in every fifth transmission time interval. As this period is predefined, no further signalling from the base station indicating to the user terminal UE1 which transmission time intervals it can use is required.

As it is assumed in the example of fig. 3 that the initial transmission of packet N from the user terminal UE1 has been successful, there is no need for a retransmission of said packet N in one of the predefined transmission time intervals indicated by the dotted arrows.

As a consequence, the unused resource blocks in the transmission time intervals indicated by the dotted arrows can be dynamically allocated to one or several other user terminals. In the example of fig. 3, the unused resource blocks are allocated to the user terminal UE2. The allocation of the resources is performed by the serving base station BS1.

The initial transmission from the user terminal UE2 is performed in the transmission time interval that has been originally reserved for the first retransmission of packet N from the user terminal UE1. As there is the need for 3 retransmissions of the packet sent by the user terminal UE2 and due to the synchronous operation of the retransmissions, the user terminal UE2 uses resource blocks of subsequent transmission time intervals originally reserved for the user terminal UE1.

As the synchronous third retransmission from user terminal UE2 is falling in the transmission time interval that has originally been reserved for the initial transmission of packet N+1 from the user terminal UE1, according to the invention, said initial transmission and subsequent retransmissions of packet N+1 from the user terminal UE1 are shifted by means of dynamic scheduling, i.e. the persistent scheduling of user terminal UE1 is adapted by dynamic scheduling.

In an embodiment of the invention, also subsequent initial transmissions and retransmissions of further packets are shifted by means of dynamic scheduling.

In order to trigger the adaptation of the persistent scheduling of user terminal UE1 by means of dynamic scheduling, the base station BS1 sends at least one control message to the user terminal UE1.

Preferably, the sending of said at least one control message is initiated by means of recognition of an upcoming collision of the transmission of transport blocks of the user terminal UE1 with the transmission or retransmission of transport blocks of at least one other user terminal UE2 caused by an intended common usage of at least one resource block in a transmission time interval for both transmissions. In the example depicted in fig. 3, the user terminal UE2 has 2 retransmission opportunities co finish the initial transmission successfully. Only in the case that a third retransmission is needed, the initial transmission of packet N+1 from user terminal UE1 is shifted in this example by 5 transmission time intervals, which was foreseen for the first retransmission of packet N+1 from user terminal UE1.

However, the sending of said at least one control message is not necessarily dependent on the recognition of an upcoming collision. In another embodiment, the predefined transmissions and retransmissions from the user terminal UE1 are automatically shifted in case of dynamic scheduling of another user terminal UE2 on transmission time intervals which are predefined for usage by user terminal UE1, but which are used by the user terminal UE1,

In an embodiment of the invention, in case of successful transmission of at least one transport block by a user terminal UE1, UE2 before the next predefined transmission time interval for an initial transmission of at least one subsequent transport block, the user terminal restores the predefined transmission time intervals of initial transmissions and subsequent retransmissions of subsequent transport blocks.

Preferably, said at least one control message is a layer one, i.e. typically physical layer, control protocol message, a layer two, i.e. typically medium access control protocol message, or a layer three, i.e. typically radio resource control, protocol message. The sending of said at lease one control message is preferably initiated by a scheduling instance of the base station BS1.

Said at least one control message can be sent as a separated message, but is preferably attached to a medium access control protocol data unit which is used to transfer user data from the base station BS1 to the user terminal UE1.

Preferably, the initial transmission of packet N+1 from the user terminal UE1 is shifted to the next transmission time interval originally reserved for usage of user terminal UE1.

In the example in fig. 3, 3 retransmissions of packet N+1 from user terminal UE1 are needed, so that the third retransmission falls on a transmission time interval that has been originally reserved for the initial transmission of packet N+2 from user terminal UE1.

Again, said initial transmission and subsequent transmissions and retransmissions from the user terminal UE1 are shifted by means of dynamic scheduling, i.e. the persistent scheduling of user terminal UE1 is adapted by dynamic scheduling either automatically or only in case of recognition of an upcoming collision of the transmission of transport blocks of the user terminal UE1 with the transmission of transport blocks of at least one other user terminal caused by an intended common usage of at least one resource block in a transmission time interval for both transmissions.

In an embodiment of the invention, the user terminal UE1 sends a control message towards the base station BS1 indicating a reduction of the data rate of a service as a result of the recognition of a silence period within the user terminal UE1 resulting in an expected decreased usage of the predefined transmission time intervals that can be used by the user terminal UE1 for transmission of service data towards the base station.

To further improve the efficiency during silence periods in terms of e.g. user terminal power consumption resulting in increased battery life, a so-called intermediate discontinuous transmission (DTX) interval can be activated by the user terminal UE1, too.

If a silence period is detected by the user germinal UE1, the user terminal UE1 sends additional information e.g. in a layer one, i.e. typically physical layer, control protocol message, a layer two, i.e. typically medium access control, protocol message, or in a layer three, i.e. typically radio resource control, protocol message to the base station, Said additional information e.g. relates to the duration of the intermediate DTX interval.

It is assumed, that the user terminal can easily detect silence periods either by means of the buffer management in the user terminal, e.g. if the buffer is empty for multiples of the so-called voice packet inter arrival time, which corresponds to a reduction of the data rate in uplink, or by means of a variation of the size of the so-called Silence Insertion Description (STD) packets in silent periods compared to voice packets during a talkspurt period.

In the case such an intermediate DTX interval was set, the next persistently scheduled radio resources of the user germinal UE1 including its reserved synchronous HARQ resources can be reallocated by the base station to other user terminals till the next valid initial transmission of the user terminal UE1.

After the intermediate DTX interval, the user terminal UE1 can send on his persistently allocated resource an initial transmission. In the absence of voice data, the user terminal UE1 will send a further DTX Information.

As soon as the user terminal UE1 sends a voice packer, both, the user terminal UE1 and the base station return to the defined persistent uplink scheduling mode.

## Claims

1. A method for scheduling of service data intended to be sent from a user terminal (UE1) over radio interfaces to a base station (BS1) by means of at least one control message sent from the base station (BS1) to the user terminal (UE1) **characterized in, that** said at least one control message at least indicates Or allows for a determination of a change of predefined transmission time intervals (TTI) in which the user terminal (UE1) shall send transport blocks comprising service data to the base station (BS1).

2. A method according to claim 1, **characterized in, that** said at least one control message is one of a layer one control protocol message, a layer two control protocol message, and a layer three control protocol message.

3. A method according to claim 1, **characterized in, that** the sending of said at least one control message is initiated by means of recognition of an upcoming collision of the transmission of transport blocks of the user terminal (UE1) with the transmission of transport blocks of at least one other user terminal (UE2) caused by an intended common usage of at least one resource block (RB) in a transmission time interval (TTI) for both transmissions.

4. A method according to claim 1 **characterized in, that** the sending of said at least one control message is initiated by a scheduling instance ot the base station.

5. A method according to claim 1, **characterized in, that** said at least one control message is attached to a medium access control protocol data unit which is used to transfer user data from the base station (BS1) to the user terminal (UE1)

6. A method according to claim 1, **characterised in, that** after reception of said at least one control message, the user terminal (UE1) changes the transmission in such a way that the predefined transmission time intervals (TTI) for initial transmissions of service data are shifted.

7. A method according to claim 1, **characterized in, that** in case of successful transmission of at least one transport block by the user terminal (UE1) before the next predefined transmission time interval (TTI) for an initial transmission of at least one subsequent transport block, the user terminal (UE1) restores the predefined transmission time intervals (TTI) of initial transmissions and subsequent retransmissions of subsequent transport blocks.

8. A method according to claim 3, **characterized in that** in case of successful transmission of at least one transport block by said at least one other terminal (UE2) before the next predefined transmission time interval (TTI) for an initial transmission of at least one subsequent transport block, the user terminal restores the predefined transmission time intervals (TTI) of initial transmissions and subsequent retransmissions of subsequent transport blocks.

9. A method according to claim 1, **characterized in, that** the at least one control message comprises information for at least one discontinuous transmission cycle of the user terminal (UE1).

10. A base station (BS1-BS8) for a scheduling procedure of service data intended to be sent from a user terminal (UE1) over radio interfaces to the base station (BS1) by means of at least one control message sent from the base station (BS1) to the user terminal (UE1)*,* **characterized in, that** said base station (BS1-BS8) comprises at least one processing means adapted to perform generation and transmission of said control message which at least indicates or allows for a determination of a change of predefined transmission time internals (TTI) in which the user terminal (UE1) shall send transport blocks comprising service data to the base station (BS1).

11. A base station (BS1-BS8) according to claim 10, **characterized in, that** said base station (BS1-BS8) comprises at least one processing means adapted to perform recognition and evaluation of an upcoming collision of the transmission of transport blocks of the user terminal (UE1) with the transmission of transport blocks of at least one other user terminal (UE2) caused by using the same resource blocks (RB) for both transmissions,

12. A user terminal (UE1) for a scheduling procedure of service data intended to be sent from the user terminal (UE1) over radio interfaces to a base station (BS1) by means of at least one control message sent from the base station (BS1) to the user terminal (UE1), **characterized in, that** said user terminal (UE1) comprises at least one processing means
● adapted to perform reception of said at least one control message which at least indicates or allows for a determination of a change of predefined transmission time intervals (TTI) in which the user terminal (UE1) shall send transport blocks comprising service data to the base station (BS1),
● and adapted to perform said change of predefined transmission time intervals (TTI).

13. A user terminal (UE1) according to claim 12 adapted to perform transmission of a control message indicating a reduction of the data rate of a service towards the base station (BS1).

14. A communication network (CN) for a scheduling procedure of service data intended to be sent from a user terminal (UE1) over radio interfaces to a base station (BS1) by means of at least one control message sent from the base station (BS1) to the user terminal (UE1), **characterized in, that** said network (CN) comprises
• at least one user terminal (UE1) comprising at least one processing means adapted to perform reception of said at least one control message which at least indicates or allows for a determination of a change of predefined transmission time intervals (TTI) in which the user terminal (UE1) shall send transport blocks comprising service data to the base station (BS1),
• and at least one base station (BS1-BS8) comprising at least one processing means adapted to perform generation and transmission ot said control message which at least indicates or allows for a determination of a change of predefined transmission time intervals (TTI) in which the user terminal (UE1) shall send transport blocks comprising service data to the base station (BS1).
